# EUROPEAN PATENT SPECIFICATION

(11) **EP 1 712 428 B1**
(45) Date of publication and mention of the grant of the patent: **25.06.2008**
(21) Application number: 06380066.8
(22) Date of filing: 04.04.2006
(51) Int. Cl.: B60R 21/04, B60R 19/18

(54) **Pillar cover element for motor vehicles and method for the production thereof**
Verkleidung für eine Kraftfahrzeugssäule und deren Herstellungsverfahren.
Elément garniture de pilier pour véhicules et méthode de production.

(30) Priority: 15.04.2005 ES 200500909
(43) Date of publication of application: 18.10.2006
(73) Proprietor: Cie Automotive, S.A., 48011 Bilbao (ES)
(72) Inventor: Almeida Azenha, Joao Jose, Lote 6-3080 Figueira Da Foz (PT); Gomes da Silva Vilaca, Fernando Jose, P.O. Box 51 3081-852 Figueira Da Foz (PT)
(74) Representative: Carpintero Lopez, Francisco

(56) References cited:
- DE-A1- 19 856 162
- US-A- 5 636 866
- US-A- 5 795 013
- US-B1- 6 679 544
- PATENT ABSTRACTS OF JAPAN vol. 1995, no. 08, 29 September 1995 (1995-09-29) & JP 07 117596 A (MAZDA MOTOR CORP), 9 May 1995 (1995-05-09)
- PATENT ABSTRACTS OF JAPAN vol. 1998, no. 07, 31 March 1998 (1998-03-31) & JP 01 035372 A (ABBOTT LAB), 6 February 1989 (1989-02-06)

## Description

### TECHNICAL FIELD OF THE INVENTION

The invention is included within the field of pillar covers for motor vehicles.

### BACKGROUND OF THE INVENTION

Pillar cover elements for motor vehicles are elements which cover the pillars in motor vehicles, especially the central pillars, which are those that separate the front windows from the back windows and in which are to be found the anchorages of the front safety belts. These pillars also serve on occasions for housing side or curtain airbags, when the vehicle incorporates such airbags. In any case, the pillar cover elements should have a certain capacity for absorbing impacts, for example, in the event of an accident, so that they serve, for instance, to cushion an impact between the driver's (or a passenger's) head and the (central) pillar of the vehicle.

Pillar cover elements are often constituted by two independent pieces assembled to each other, specifically, by an exterior piece or lining (which is usually manufactured in a plastic material) and an intermediate piece, which is configured to absorb impacts and which is usually constituted by cardboard, foam or metal and has reticulate configuration, in the form of a honeycomb, egg-box, etc.

On the other hand, elements manufactured in a single piece are also known.

Dokument US 5795013 also discloses such a pillar cover element, molded in one single piece comprising an energy absorbing device that can be tuned by varying different features of the fins and/or the stabilizers that interconnect all the fins in a given row for giving lateral stability thereto.

Different examples of known pillar cover elements are described in, for example, the U.S. patents US-A-5720510, US-A-5938273 and US-B-6309011, as well as in the European patent applications EP-A-0857624 and EP-A-1215092. As described in EP-A-1215092, the pillar cover elements can incorporate, in their intermediate piece, an anti-fragmentation net to prevent the fragmentation of the pillar cover in the event of an impact. This can be particularly important when the pillar houses an airbag since the latter, on being activated, causes the rupture of the lining of the pillar cover element and can cause the fragmentation of the pillar cover element into small particles, dangerous for the occupants of the vehicle.

The purpose of the pillar cover element object of the invention is to improve the capacity to absorb impacts from known elements and at the same time reduce the operations necessary for their production and assembly and, therefore, the final cost of the same.

### DESCRIPTION OF THE INVENTION

A first aspect of the invention relates to a pillar cover element for motor vehicles (for example, for the central pillar of the motor vehicle, that is, for the pillar which separates the front window from the rear window and which can incorporate a side or curtain airbag), which comprises:
an exterior part; and
an impact-absorbing structure which extends from an interior surface of the exterior part.

In accordance with the invention, said impact-absorbing structure comprises a plurality of impact-absorbing elements separated from each other and that each one extends inwards from said interior surface of the exterior part, for example, in a perpendicular or substantially perpendicular direction to said interior surface. Each one of the impact-absorbing elements comprises three partitions joined to each other by a side of each partition, whereby between a first pair of partitions a first angle is formed, between a second pair of partitions a second angle is formed, and between a third pair of partitions a third angle is formed.

This configuration, which can be termed a "duck's foot configuration", has proved to be especially useful for the formation of an impact-absorbing structure which allows the pillar cover elements to be produced as "one piece parts", made of a single material (that is, a same material being used both for the exterior part and for the impact-absorbing structure) and in a single injection phase in a mold. This structure allows thereby good impact-absorbing properties to be obtained, at the same time as it allows a simple design of the molds and the possibility of not using excessively expensive materials, and without requiring an excessive quantity of material.

The first angle, the second angle and the third angle can each be approximately 120°. In this way, the partitions are arranged in a regular form, each one displaced by 120° (or approximately 120°) with respect to the other two partitions (in the plane which crosses all the partitions or impact-absorbing elements and which can be the plane in which approximately the free ends of the partitions are found, if the same are in the same plane).

The height of the partitions can be the same for all the partitions, or it can vary along the exterior part. As regards the length of each partition, from the edge on which it is joined to the other partitions and up to its free edge, it can be the same for all the partitions, although it is also possible that there are differences between the lengths of the partitions of a same impact-absorbing element. For example, one partition could be longer than the other two.

Each partition can have a first thickness and/or first length in an area near to the exterior part (that is, in the area in which it "emerges" from the interior surface of said exterior part) and a second thickness and/or second length in an area far from the exterior part, said first thickness and/or first length being greater than said second thickness and/or second length, respectively. Thus, the partition -and, therefore, the impact-absorbing element- is "stronger" in the area proximate to the interior surface of the exterior part, a factor which can serve to prevent premature collapse of the impact-absorbing structure, that is, a collapse of said structure when it suffers the impact, without it having properly performed its function of energy dissipation.

The pillar cover element or, at least, the exterior part mentioned and impact-absorbing structure of the same can be fabricated in a plastic material and/or as a single molded piece. However, the exterior part can include a lining of a different material, which can be joined to the exterior part in the actual production phase of said exterior part in the mold.

The impact-absorbing elements can be arranged in rows, so that the impact-absorbing elements of a row have their partitions oriented in a form opposing the orientation of the partitions of the impact-absorbing elements of the adjacent rows, in the plane which crosses the impact-absorbing elements. That is, a row can have the impact-absorbing elements with the partitions oriented in one way (for example, with one partition oriented in a first direction parallel to the direction of the row and with the other two partitions oriented at an angle with respect to the general direction of the row), whilst in the adjacent rows, the partitions can be oriented in the reverse manner. Thus, in alternate rows, it is possible to repeat the orientation of the partitions (that is, the "even" rows can have the partitions oriented in one way and the "odd" rows in another).

Also (or alternatively), the impact-absorbing elements can be arranged in rows, the impact-absorbing elements in each row being displaced with respect to the impact-absorbing elements of the adjacent row or rows, in the direction of the row. Thus, a structure can be established with rows displaced in an alternating form, so that the impact-absorbing elements of "even" rows are at the same height in the direction of the row, etc.

The pillar cover element can incorporate an antifragmentation net or similar, to prevent the element from breaking into small particles that can detach from the structure and injure an occupant of the vehicle, for example, in the event of an impact or in the event of an airbag housed in the pillar being activated.

Another aspect of the invention relates to a method of manufacturing a pillar cover element in accordance with that described above. The method comprises the step of producing the exterior part and the impact-absorbing elements together, in a same mold and during a same injection phase.

### DESCRIPTION OF THE DRAWINGS

To complete the description being made and in order to assist in a better understanding of the characteristics of the invention, in accordance with a preferred example of practical embodiment, this description is accompanied, as an integral part of the same, with a set of drawings by way of illustration but without restricting, in which the following has been represented:
Figure 1. - Shows a partial view in perspective of a pillar cover element in accordance with a preferred embodiment of the invention.
Figure 2. - Shows a detail of this pillar cover element.
Figures 3A-3C. - These show diagrams of a cross section, a view in perspective and another cross section at mid-height, respectively, of an impact-absorbing element.
Figure 4. - Shows a diagram of a possible distribution of the impact-absorbing elements.
Figures 5A-5H. - These show diagrams of different practical examples of configuration and distribution of the elements for impact distribution.

### PREFERRED EMBODIMENT OF THE INVENTION

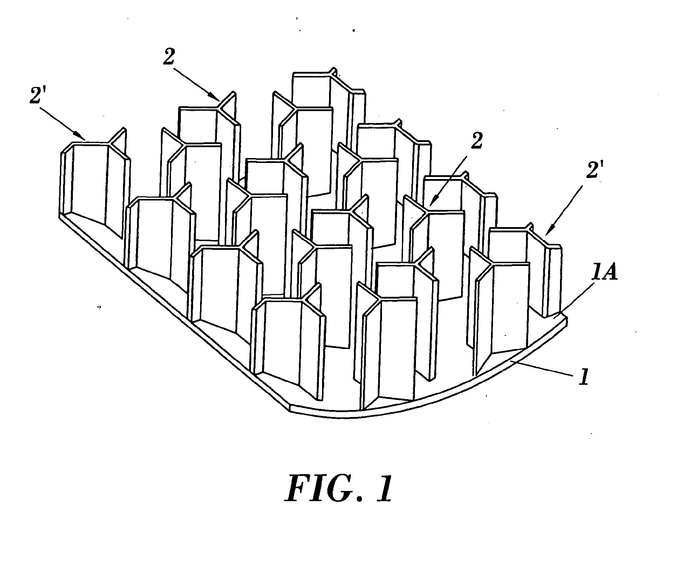

Figure 1 illustrates a part of a pillar cover element for motor vehicles, in accordance with a preferred embodiment of the invention. The pillar cover element can have a basic shape similar to conventional pillar cover elements, and like them comprise an exterior part (1), on the interior surface (1A) of which is mounted a damping or impact-absorbing structure.

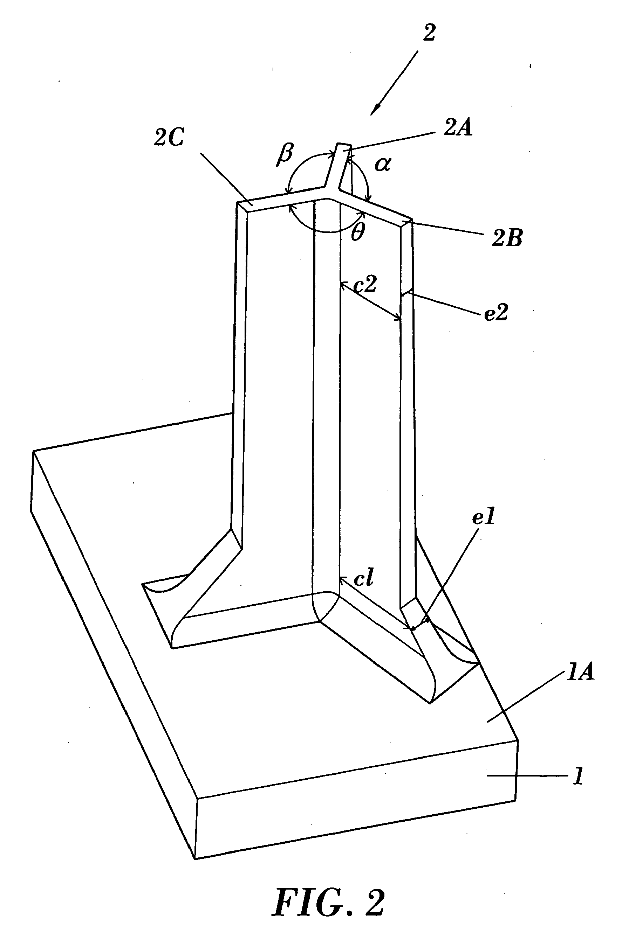

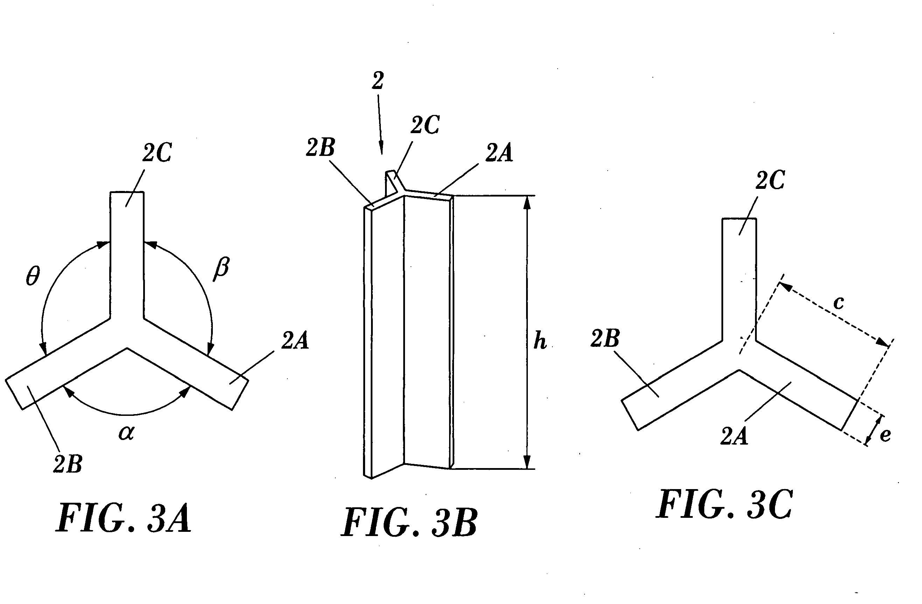

This impact-absorbing structure extends from said interior surface (1A) and comprises a plurality of impact-absorbing elements (2) separated from each other. As can be observed in figure 1 and, with more detail, in figures 2 and 3A-3C, each of the impact-absorbing elements (2) comprises three partitions (2A, 2B, 2C) joined to each other by one side of each partition, so that between a first pair of partitions (2A, 2B) a first angle (α) is formed, between a second pair of partitions (2A, 2C) a second angle (β) is formed, and between a third pair of partitions (2B, 2C) a third angle (θ) is formed. The partitions can be identical in length and the aforementioned angles can be the same, that is, each partition can form an angle (α, β, θ) of 120° with the other partitions. ln this preferred embodiment of the invention, the impact-absorbing elements only comprise these three partitions, with no other additional elements.

As can be observed in figure 2, the partitions (2A, 2B, 2C) have a first thickness (e1) in an area near to the exterior part 1 and a second thickness (e2) in an area far from the exterior part, said first thickness (e1) being greater than said second thickness (e2). In addition, the partitions (2A, 2B, 2C) have a first length (c1) in an area near to the exterior part (1) and a second length (c2) in an area far from the exterior part, this first length (c1) being greater than said second length (c2).

Thus, the partitions are "stronger" in the area near to the interior surface (1A) of the exterior part (1), something that can serve to prevent the premature collapse of the impact-absorbing structure, that is, that said structure collapses without having properly performed its function of energy dissipation.

As can be observed in the figures, the pillar cover element has a configuration which allows it to be manufactured of a plastic material, as a single molded piece; that is, the exterior part (1) and the impact-absorbing elements (2) can be produced together, in a same mold and during a same injection phase.

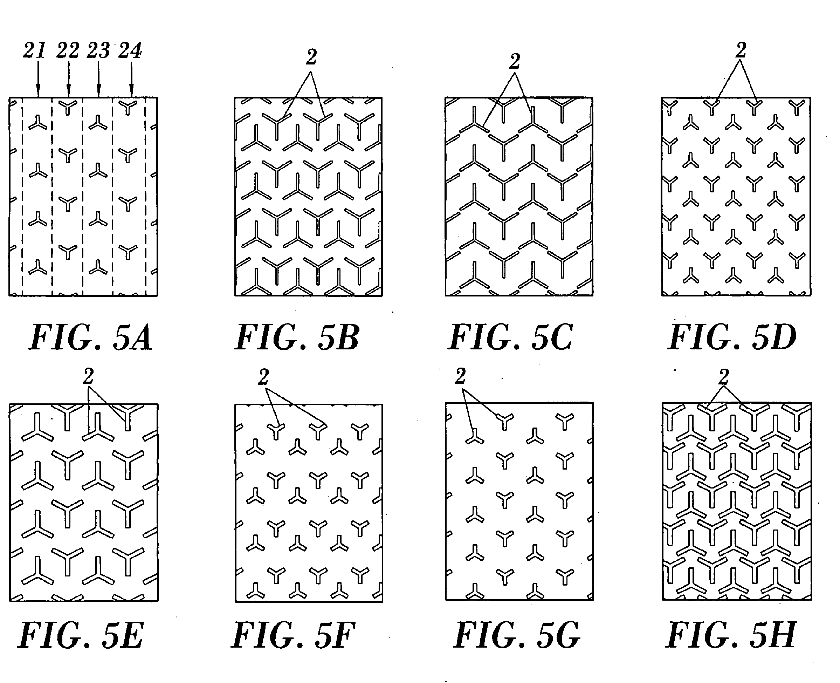

Figure 5A illustrates how the impact-absorbing elements (2) can be arranged in rows (21, 22, 23, 24), so that the impact-absorbing elements (2) of one row (21, 23) have their partitions oriented opposite to the orientation of the partitions of the impact-absorbing elements of the adjacent rows (22, 24), in a plane which crosses the impact-absorbing elements (2). Specifically, in figure 5A, it is seen how in two rows (21, 23), the "duck's feet" that form the section of the partitions have one partition "pointing upwards" and two at an angle with respect to the direction of the row, whilst in the other two rows (22, 24) the "duck's feet" have one partition "pointing downwards" and two at an angle. In addition, it is observed how the impact-absorbing elements (2) of each row are displaced with respect to the impact-absorbing elements (2) of the adjacent rows, in the direction of the row. That is, it is seen how the impact-absorbing elements (2) of, for example, row 22 are displaced "vertically" with respect to the impact-absorbing elements of the adjacent rows (21, 23).

Figures 5B-5H illustrate different practical examples of the configuration and distribution of the impact-absorbing elements (2).

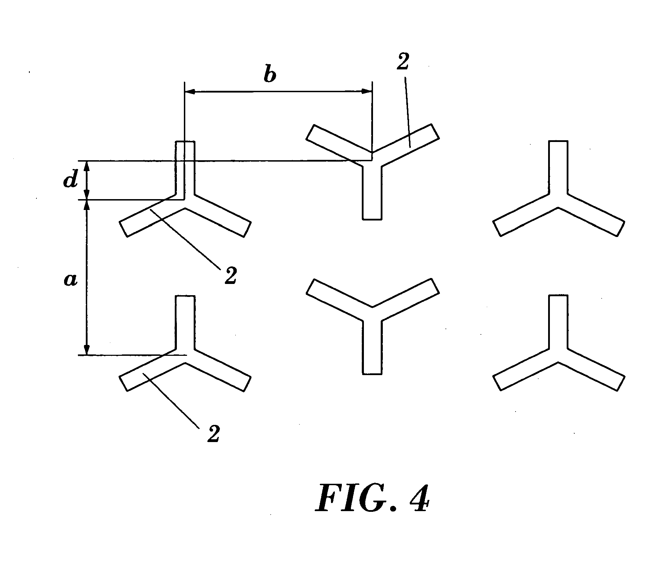

Figure 4 illustrates a possible practical implementation, in which it can be observed how the rows are separated by a distance (b) which typically can be between 13 mm and 19 mm (for example, 16 mm) (considering the distance between the centres or axes of longitudinal symmetry of each impact-absorbing element (2)), the impact-absorbing elements (2) being the central row (in figure 4) displaced "upwards" a distance (d), which typically can be between 5 mm and 9 mm (for example, 7 mm), with respect to the impact-absorbing elements (2) of the adjacent rows. In addition, in a typical configuration, the distance (a) between the centres of successive impact-absorbing elements (2) of a same row can be between 6 mm and 12 m (for example, 9 mm).

Furthermore, and considering figures 3B and 3C, in a typical case, the impact-absorbing elements (2) can have the following dimensions:
- the height (h) of the partitions can be, for example, between 12.5 and 22.5 mm (for example, 17.5 mm)
- the length (c) of each partition can be, for example, between 2.5 and 4.5 mm (for example, 3.5 mm)
- the thickness (e) of each partition can be, for example, between 0.5 and 2 mm (for example, 1 mm).

Logically, the pillar cover element can incorporate an antifragmentation net.

It is not necessary that all the impact-absorbing elements be exactly the same. For example, in figure 1 it is observed how in the pillar cover element there are two exterior rows (those that run along the edges of the exterior part (1)) which comprise impact-absorbing elements (2') with a configuration slightly different to that of the other impact-absorbing elements (2).

In this text, the word "comprises" and its variants (such as "comprising", etc.) are not to be interpreted in an exclusive manner, that is, they do not exclude the possibility that what is described include other elements, steps, etc.

Furthermore, the invention is not limited to the specific embodiments that have been described, but it also includes, for example, the variants that can be carried out by a normal expert in the matter (for example, regarding the selection of materials, dimensions, components, configuration, etc.), within what is deduced from the claims.

## Claims

1. Pillar cover element for motor vehicles which comprises:
an exterior part (1); and
an impact-absorbing structure which extends from an interior surface (1A) of the exterior part (1)
said impact-absorbing structure comprising a plurality of impact-absorbing elements (2) separated from each other and extending from said interior surface (1A) of the exterior part (1), **characterised in that** each one of said impact-absorbing elements (2) comprises three partitions (2A, 2B, 2C) joined to each other by one side of each partition, so that between a first pair of partitions (2A, 2B) a first angle (α) is formed, between a second pair of partitions (2A, 2C) a second angle (β) is formed, and between a third pair of partitions (2B, 2C) a third angle (θ) is formed.

2. Pillar cover element in accordance with claim 1, **characterised in that** said first angle (α), said second angle (β) and said third angle (θ) are each approximately 120°.

3. Pillar cover element in accordance with any one of the preceding claims, **characterized in that** each partition (2A, 2B, 2C) has a first thickness (e1) in an area proximate to the exterior part (1) and a second thickness (e2) in an area far from the exterior part, said first thickness (e1) being greater than said second thickness (e2).

4. Pillar cover element in accordance with any one of the preceding claims, **characterized in that** each partition (2A, 2B, 2C) has a first length (c1) in an area near to the exterior part (1) and a second length (c2) in an area far from the exterior part, said first length (c1) being greater than said second length (c2).

5. Pillar cover element in accordance with any one of the preceding claims, **characterised in that** it is fabricated from a plastic material.

6. Pillar cover element in accordance with any one of the preceding claims, **characterized in that** it is fabricated as a single molded piece.

7. Pillar cover element in accordance with any one of the preceding claims, **characterised in that** the impact-absorbing elements (2) are arranged in rows (21, 22, 23, 24), so that the impact-absorbing elements (2) of one row (21, 23) have their partitions oriented opposite to the orientation of the partitions of the impact-absorbing elements of the adjacent rows (22, 24).

8. Pillar cover element in accordance with any one of the preceding claims, **characterised in that** the impact-absorbing elements are arranged in rows (21, 22, 23, 24), the impact-absorbing elements (2) of each row being displaced with respect to the impact-absorbing elements (2) of the adjacent row, in the direction of the row.

9. Pillar cover element in accordance with any one of the preceding claims, **characterized in that** it incorporates an antifragmentation net.

10. Method of manufacturing a pillar cover element in accordance with any one of the previous claims, **characterized in that** the method comprises the step of producing the exterior part (1) and the impact-absorbing elements (2) together, in a same mold and during a same injection phase.

## Patentansprüche

1. Säulenverkleidungselement für Kraftfahrzeuge, die umfasst:
einen Außenteil (1) und
eine aufpralldämpfende Struktur, die sich von einer Innenfläche (1A) des Außenteils (1) erstreckt,
wobei die aufpralldämpfende Struktur eine Vielzahl von aufprallabsorbierenden Elementen (2) umfasst, die voneinander separiert sind und sich von der Innenfläche (1A) des Außenteils (1) erstrecken, **dadurch gekennzeichnet, dass** jedes einzelne der aufprallabsorbierenden Elemente (2) drei Trennwände (2A, 2B, 2C) umfasst, die durch eine Seite jeder Trennwand so miteinander verbunden sind, dass zwischen einem ersten Paar von Trennwänden (2A, 2B) ein erster Winkel (α) gebildet wird, zwischen einem zweiten Paar von Trennwänden (2A, 2C) ein zweiter Winkel ( ) gebildet wird und zwischen einem dritten Paar von Trennwänden (2B, 2C) ein dritter Winkel (θ) gebildet wird.

2. Säulenverkleidungselement nach Anspruch 1, **dadurch gekennzeichnet, dass** der erste Winkel (α), der zweite Winkel ( ) und der dritte Winkel (θ) jeder ungefähr 120° sind.

3. Säulenverkleidungselement nach einem der vorhergehenden Ansprüche, **dadurch gekennzeichnet, dass** jede Trennwand (2A, 2B, 2C) in einem Bereich nahe dem Außenteil (1) eine erste Dicke (e1) hat und in einem Bereich, entfernt von dem Außenteil liegend, eine zweite Dicke (e2) hat, wobei die erste Dicke (e1) größer als die zweite Dicke (e2) ist.

4. Säulenverkleidungselement nach einem der vorhergehenden Ansprüche, **dadurch gekennzeichnet, dass** jede Trennwand (2A, 2B, 2C) in einem Bereich nahe dem Außenteil (1) eine erste Länge (c1) hat und in einem Bereich, entfernt von dem Außenteil liegend, eine zweite Länge (c2) hat, wobei die erste Länge (c1) größer als die zweite Länge (c2) ist.

5. Säulenverkleidungselement nach einem der vorhergehenden Ansprüche, **dadurch gekennzeichnet, dass** sie aus einem Kunststoffmaterial gefertigt ist.

6. Säulenverkleidungselement nach einem der vorhergehenden Ansprüche, **dadurch gekennzeichnet, dass** sie als ein einzelnes Formstück gefertigt ist.

7. Säulenverkleidungselement nach einem der vorhergehenden Ansprüche, **dadurch gekennzeichnet, dass** die aufprallabsorbierenden Elemente (2) in Reihen (21, 22, 23, 24) so angeordnet sind, dass die aufprallabsorbierenden Elemente (2) einer Reihe (21, 23) ihre Trennwände entgegengesetzt zu der Ausrichtung der Trennwände der aufprallabsorbierenden Elemente der benachbarten Reihen (22, 24) ausgerichtet haben.

8. Säulenverkleidungselement nach einem der vorhergehenden Ansprüche, **dadurch gekennzeichnet, dass** die aufprallabsorbierenden Elemente (2) in Reihen (21, 22, 23, 24) angeordnet sind, wobei die aufprallabsorbierenden Elemente (2) jeder Reihe in Bezug auf die aufprallabsorbierenden Elemente (2) der benachbarten Reihe in der Richtung der Reihe versetzt sind.

9. Säulenverkleidungselement nach einem der vorhergehenden Ansprüche, **dadurch gekennzeichnet, dass** sie ein Splitterschutznetz integriert.

10. Verfahren zum Herstellen eines Säulenverkleidungselements nach einem der vorhergehenden Ansprüche, **dadurch gekennzeichnet, dass** das Verfahren den Schritt des Produzierens des Außenteils (1) und der aufprallabsorbierenden Elemente (2) zusammen, in derselben Form und während derselben Spritzphase, umfasst.

## Revendications

1. Elément d'enveloppe de pilier pour véhicules à moteur, qui comprend :
une partie extérieure (1) ; et
une structure absorbant les chocs, qui s'étend depuis une surface intérieure (1A) de la partie extérieure (1),
ladite structure absorbant les chocs comprenant une pluralité d'éléments absorbant les chocs (2), séparés les uns des autres et s'étendant à partir de ladite surface intérieure (1A) de la partie extérieure (1), **caractérisé en ce que** chacun desdits éléments absorbant les chocs (2) comprend trois cloisons (2A, 2B, 2C) jointes les unes aux autres d'un côté de chaque cloison, de sorte qu'entre une première paire de cloisons (2A, 2B) un premier angle (α) est formé, entre une deuxième paire de cloisons (2A, 2C) un deuxième angle (β) est formé, et entre une troisième paire de cloisons (2B, 2C) un troisième angle (θ) est formé.

2. Elément d'enveloppe de pilier selon la revendication 1, **caractérisé en ce que** ledit premier angle (α), ledit deuxième angle (β) et ledit troisième angle (θ) sont chacun d'approximativement 120°.

3. Elément d'enveloppe de pilier selon l'une quelconque des revendications précédentes, **caractérisé en ce que** chaque cloison (2A, 2B, 2C) a une première épaisseur (e1) dans une zone à proximité de la partie extérieure (1) et une seconde épaisseur (e2) dans une zone éloignée de la partie extérieure, ladite première épaisseur (e1) étant plus grande que ladite seconde épaisseur (e2).

4. Elément d'enveloppe de pilier selon l'une quelconque des revendications précédentes, **caractérisé en ce que** chaque cloison (2A, 2B, 2C) a une première longueur (c1) dans une zone près de la partie extérieure (1) et une seconde longueur (c2) dans une zone éloignée de la partie extérieure, ladite première longueur (c1) étant plus grande que ladite seconde longueur (c2).

5. Elément d'enveloppe de pilier selon l'une quelconque des revendications précédentes, **caractérisé en ce qu'**il est fabriqué à partir d'une matière plastique.

6. Elément d'enveloppe de pilier selon l'une quelconque des revendications précédentes, **caractérisé en ce qu'**il est fabriqué sous forme de pièce moulée unique.

7. Elément d'enveloppe de pilier selon l'une quelconque des revendications précédentes, **caractérisé en ce que** les éléments absorbant les chocs (2) sont disposés en rangées (21, 22, 23, 24), de sorte que les éléments absorbant les chocs (2) d'une rangée (21, 23) ont leurs cloisons orientées en opposition à l'orientation des cloisons des éléments absorbant les chocs des rangées adjacentes (22, 24).

8. Elément d'enveloppe de pilier selon l'une quelconque des revendications précédentes, **caractérisé en ce que** les éléments absorbant les chocs sont disposés en rangées (21, 22, 23, 24), les éléments absorbant les chocs (2) de chaque rangée étant déplacés par rapport aux éléments absorbant les chocs (2) de la rangée adjacente, dans la direction de la rangée.

9. Elément d'enveloppe de pilier selon l'une quelconque des revendications précédentes, **caractérisé en ce qu'**il incorpore un filet antifragmentation.

10. Procédé de fabrication d'un élément d'enveloppe de pilier selon l'une quelconque des revendications précédentes, **caractérisé en ce que** le procédé comprend l'étape consistant à produire la partie extérieure (1) et les éléments absorbant les chocs (2) ensemble, dans un même moule et pendant une même phase d'injection.
